# FASCICULE DE BREVET EUROPEEN

(11) **EP 3 968 066 B1**
(45) Date de publication et mention de la délivrance du brevet: **06.05.2026**
(21) Numéro de dépôt: 21196188.3
(22) Date de dépôt: 10.09.2021
(51) Int. Cl.: G02B 6/028, G02B 6/42

(54) **GUIDE D'ONDE COMPORTANT UNE FIBRE OPTIQUE MULTIMODE ET ADAPTE A CONCENTRER SPATIALEMENT LES MODES GUIDES**
WELLENLEITER, DER EINE OPTISCHE MULTIMODE-FASER UMFASST UND DIE GEFÜHRTEN MODEN RÄUMLICH KONZENTRIEREN KANN
WAVEGUIDE COMPRISING A MULTIMODE OPTICAL FIBRE AND ADAPTED TO SPATIALLY CONCENTRATE THE GUIDED MODES

(30) Priorité: 14.09.2020 FR 2009299
(43) Date de publication de la demande: 16.03.2022
(73) Titulaire: Commissariat à l'Energie Atomique et aux Energies Alternatives, 75015 Paris (FR)
(72) Inventeur: GERARD, Jean-Michel, 38054 GRENOBLE (FR)
(74) Mandataire: Santarelli

(56) Documents cités:
- WO-A2-2019/032227
- US-A- 5 647 041
- US-A1- 2009 020 839
- US-A1- 2017 176 697
- US-A1- 2017 242 204
- QINGKUN LIU ET AL: "Fabrication and Characterization of Small Optical Ridge Waveguides Based on SU-8 Polymer", JOURNAL OF LIGHTWAVE TECHNOLOGY, IEEE, USA, vol. 27, no. 18, 5 September 2009 (2009-09-05), pages 4091 - 4096, XP011268696, ISSN: 0733-8724, DOI: 10.1109/JLT.2009.2022285
- EISAMAN M ET AL: "Invited Review Article: Single-photon sources and detectors", REVIEW OF SCIENTIFIC INSTRUMENTS, AIP, MELVILLE, NY, US, vol. 82, no. 7, 27 July 2011 (2011-07-27), pages 71101 - 71101, XP012146546, ISSN: 0034-6748, DOI: 10.1063/1.3610677
- WANG XI-BIN ET AL: "Thermal UV treatment on SU-8 polymer for integrated optics", vol. 4, no. 3, 1 March 2014 (2014-03-01), pages 509 - 20317, XP055881748, Retrieved from the Internet <URL:https://www.osapublishing.org/DirectPDFAccess/C8A174AA-14BA-44FE-A0F664F6AC4F53CD_279824/ome-4-3-509.pdf?da=1&id=279824&seq=0&mobile=no> DOI: 10.1364/OME.4.000509

## Description

### DOMAINE TECHNIQUE

Le domaine de l'invention est celui des guides d'onde comportant une fibre optique multimode. L'invention porte notamment sur un tel guide d'onde multimode adapté à concentrer spatialement les modes guidés.

### ÉTAT DE LA TECHNIQUE ANTÉRIEURE

Les fibres optiques multimodes permettent de guider un signal optique tout en supportant différents modes de propagation. Elles sont particulièrement utiles notamment pour la détection de signaux optiques de faible flux, par exemple dans le cadre de l'astronomie ou celui de la télédétection par laser (LIDAR), puisque de telles fibres optiques multimodes présentent habituellement une ouverture numérique élevée ainsi qu'une dimension radiale importante devant la longueur d'onde λ du signal optique, optimisant ainsi le taux de collection par la fibre optique multimode du signal optique incident.

Cependant, il existe un besoin de disposer d'un guide d'onde comportant une fibre optique multimode, ce guide devant être adapté à concentrer spatialement les modes guidés au niveau d'une face de sortie tout en minimisant les pertes optiques associées à une telle concentration spatiale.

C'est le cas notamment lorsque le signal optique est destiné à être transmis en direction d'un photodétecteur dont la zone de détection présente des dimensions inférieures à celles de la fibre optique multimode. Ainsi, à titre d'exemple, une fibre optique multimode adaptée à guider un signal optique de 1.55µm de longueur d'onde peut présenter une dimension transversale de l'ordre de plusieurs centaines de microns, par exemple un diamètre de 300µm. Or, une photodiode de type SPAD (*Single Photon Avalanche Diode,* en anglais) ou de type SNSPD (*Superconducting Nanowire Single Photon Detector,* en anglais) peut présenter une zone de détection de l'ordre de quelques dizaines de microns de côté, par exemple 20µm seulement.

On connaît par ailleurs les fibres optiques dont l'extrémité est effilée de manière adiabatique, mais il s'agit généralement de fibres optiques monomodes. En effet, l'effilement adiabatique du cœur de la fibre, appliqué à une fibre optique multimode, conduirait à générer de fortes pertes optiques.

Par ailleurs, le document US2017/176697A1 décrit une structure de couplage optique assurant le couplage entre une fibre multimode et un photodétecteur. Cette structure de couplage optique comporte, réalisées d'un seul tenant et en un même matériau, une partie amont qui s'étend latéralement de part et d'autre de la fibre multimode de manière à former ensuite des pieds venant en appui contre le photodétecteur, et une partie aval de forme tronconique.

Enfin, le document WO2019/032227A2 décrit une fibre optique effilée assurant une adaptation de la forme des modes guidés entre une extrémité d'entrée rectangulaire et une extrémité de sortie circulaire. La source optique du faisceau lumineux, couplée à la fibre optique effilée, présente une ouverture numérique suffisamment faible pour exciter, à l'extrémité d'entrée de la fibre optique effilée, seulement un petit nombre de modes guidés (d'ordre faible), ceux-là même qui peuvent être guidés jusqu'à l'extrémité de sortie circulaire. Le document US5647041A décrit un compresseur de faisceau optique formé d'un matériau transparent à la lumière pour comprimer des signaux optiques émis à partir d'une extrémité d'une fibre optique. Le compresseur a une forme sensiblement effilée s'étendant entre une première surface ou base ayant une section transversale, et une deuxième surface ou tête ayant une section transversale inférieure à la section transversale de la base.

### EXPOSÉ DE L'INVENTION

L'invention a pour objectif de remédier au moins en partie aux inconvénients de l'art antérieur, et plus particulièrement de proposer un guide d'onde comportant une fibre optique multimode et adapté à concentrer spatialement les modes guidés au niveau de sa face de sortie, tout en minimisant les pertes optiques associées à une telle concentration spatiale. Le guide d'onde peut être dimensionné pour transmettre et concentrer un très grand nombre de modes optiques avec des pertes minimales, par exemple au moins 1000 voire au moins 10000 (par exemple quelques dizaines de milliers).

Pour cela, l'objet de l'invention est un guide d'onde multimode tel que défini dans la revendication 1 ci-jointe, comportant une fibre optique multimode qui comporte un cœur réalisé en un matériau d'indice de réfraction n_{fc} et présentant une dimension transversale d_{fc}, entouré d'une gaine en un milieu d'indice de réfraction n_{fg} inférieur à n_{fc} ; et qui s'étend longitudinalement suivant un axe optique Δ entre une première face destinée à recevoir un signal optique, et une deuxième face opposée destinée à transmettre le signal optique.

Le guide d'onde multimode comporte en outre une structure de concentration, de forme tronconique centrée sur l'axe optique Δ, présentant une face d'entrée par laquelle la structure de concentration est couplée optiquement et assemblée à la deuxième face de la fibre optique multimode, et une face de sortie opposée présentant une surface inférieure à celle de la face d'entrée, et réalisée en un matériau de haut indice de réfraction n_{pc} supérieur à n_{fc}, présentant une dimension transversale locale d_{pc}, et entouré d'un milieu d'indice de réfraction n_{pg} inférieur à n_{pc}.

La structure de concentration présente une variation adiabatique de sa dimension transversale locale d_{pc} allant d'une valeur d_{pc,in} au niveau de la face d'entrée à une valeur d_{pc,out} au niveau de la face de sortie. La valeur d_{pc,in} de la dimension transversale locale d_{pc} est au moins égale à une valeur d_{fc} de la dimension transversale d_{fc} du cœur de la fibre optique multimode au niveau de la deuxième face. La structure de concentration est configurée de sorte que le nombre de modes optiques supportés au niveau de la face de sortie est au moins égal au nombre de modes optiques supportés par la fibre optique multimode.

De plus, la structure de concentration présente une forme tronconique sur toute sa longueur, entre la face d'entrée et la face de sortie. Elle est assemblée à la deuxième face de la fibre optique multimode, soit par contact entre la deuxième face et la face d'entrée, soit par l'intermédiaire d'une couche antireflet disposée entre la deuxième face et la face d'entrée. Elle est entourée sur toute sa longueur par une gaine d'indice de réfraction n_{pg} inférieur à n_{pc}.

Certains aspects préférés mais non limitatifs de ce guide d'onde multimode sont les suivants.

Le nombre de modes optiques supportés au niveau de la face de sortie peut être au moins égal à 40 voire à 1000, ou encore à 10000. La structure de concentration est configurée de sorte que la relation (n_{pc}² - n_{pg}²)×d_{pc,out}² ≥ (n_{fc}² - n_{fg}²)×d_{fc}² est vérifiée.

Le matériau de haut indice de la structure de concentration peut être un matériau semiconducteur cristallin.

Le matériau de haut indice de la structure de concentration peut être un élément ou un composé IV, ou peut être un composé III-V.

La structure de concentration peut présenter une variation longitudinale d_{pc}(z) continue de la dimension transversale d_{pc}.

La variation longitudinale d_{pc}(z) de la dimension transversale d_{pc} peut présenter sur toute sa longueur une pente locale inférieure ou égale, en valeur absolue, à 20°.

La variation longitudinale d_{pc}(z) de la dimension transversale d_{pc} peut être décroissante sur au moins une partie de la structure de concentration débouchant sur la face aval.

La variation longitudinale d_{pc}(z) de la dimension transversale d_{pc} peut être croissante sur une partie de la structure de concentration s'étendant à partir de la face amont.

La structure de concentration peut présenter une longueur Lₚ au moins égale à deux fois la valeur d_{fc} de la dimension transversale d_{fc} du cœur de la fibre optique multimode au niveau de la deuxième face.

La structure de concentration est de préférence symétrique de révolution autour de l'axe optique.

Le rapport d_{pc,in}/d_{pc,out} peut être supérieur ou égal à 2.

L'invention porte également sur un dispositif d'émission lumineuse, comportant une source lumineuse ainsi que le guide d'onde multimode selon l'une quelconque des caractéristiques précédentes, le guide d'onde multimode étant couplé optiquement à la source lumineuse par la première face de la fibre optique multimode.

L'invention porte également sur un dispositif de photodétection, comportant un photodétecteur et le guide d'onde multimode selon l'une quelconque des caractéristiques précédentes, le guide d'onde multimode étant destiné à transmettre par la face de sortie un signal optique de longueur d'onde λ en direction du photodétecteur, la face de sortie étant au contact d'une surface de réception du photodétecteur destinée à recevoir le signal optique, ou en est espacée d'une distance inférieure ou égale à λ/n, où n étant l'indice de réfraction d'un milieu situé entre la face de sortie et la surface de réception du photodétecteur.

L'invention porte également sur un procédé de fabrication d'un guide d'onde multimode selon l'une quelconque des caractéristiques précédentes, comportant les étapes suivantes : réalisation d'au moins une portion parallélépipédique en le matériau de haut indice de la structure de concentration, à partir d'un wafer du même matériau ; assemblage de la portion parallélépipédique à la deuxième face de la fibre optique multimode ; usinage de la portion parallélépipédique de manière à obtenir la variation adiabatique de la dimension transversale locale d_{pc} de la portion parallélépipédique, obtenant ainsi la structure de concentration.

L'invention porte également sur un procédé de fabrication d'un guide d'onde multimode selon l'une quelconque des caractéristiques précédentes, comportant les étapes suivantes : réalisation d'une portion tronconique sur la deuxième face de la fibre optique multimode ; dépôt d'une couche d'encapsulation recouvrant au moins la portion tronconique ; suppression de la portion tronconique par gravure sélective du matériau de celle-ci, libérant ainsi un espace vide délimité par la couche d'encapsulation ; dépôt du matériau de haut indice de la structure de concentration remplissant ainsi l'espace vide, et formant ainsi la structure de concentration.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1A est une vue schématique et partielle, en coupe longitudinale, d'un guide d'onde multimode selon un mode de réalisation ;
les figures 1B à 1E sont des vues schématiques et partielles, en coupe longitudinale, d'un guide d'onde multimode selon des variantes de réalisation ;
la figure 2 est une vue schématique et partielle, en coupe longitudinale, d'un dispositif de détection comportant un guide d'onde multimode identique à celui illustré sur la fig.1A et un photodétecteur ;
la figure 3A illustre une carte de champ en régime stationnaire d'un signal optique se propageant dans une fibre optique multimode en silice effilée, réalisée d'une manière similaire aux fibres optiques monomodes en silice effilées ;
la figure 3B illustre une carte de champ en régime stationnaire d'un signal optique se propageant dans un guide d'onde multimode selon un mode de réalisation de l'invention ;
la figure 3C illustre l'évolution longitudinale des coefficients de transmission T(z) et de pertes optiques P(z) associées à la partie effilée de la fibre optique multimode illustrée sur la fig.3A (notés T₃ et P₃), et à la structure de concentration du guide d'onde illustré sur la fig.3B (notés T₁ et P₁) ;
la figure 4 illustre différentes étapes d'un procédé de réalisation d'un guide d'onde multimode selon un mode de réalisation.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un guide d'onde multimode adapté à guider un signal optique tout en concentrant spatialement les modes guidés au niveau d'une face de sortie de taille réduite, avec des pertes optiques, associées à cette concentration spatiale, minimales. Par concentration spatiale des modes guidés, on entend ici une concentration latérale de l'intensité optique des modes guidés. Autrement dit, la répartition spatiale de l'intensité optique des modes guidés, dans un plan transversal qui est orthogonal à l'axe optique Δ du guide d'onde multimode, présente, au niveau de la face de sortie, une dimension réduite.

Comme détaillé par la suite, le guide d'onde multimode selon l'invention comporte une fibre optique multimode couplée optiquement et assemblée à une structure rapportée, appelée par la suite structure tronconique de concentration ou concentrateur multimode, assurant la concentration spatiale des modes guidés au niveau de la face de sortie.

Un tel guide d'onde multimode peut être notamment utilisé dans le cadre d'un dispositif optoélectronique de détection, celui-ci comportant le guide d'onde multimode selon l'invention et un photodétecteur, par exemple un photodétecteur quantique ou un photodétecteur de type non refroidi (microbolomètre), entre autres. Il peut également être utilisé dans le cadre d'un dispositif optoélectronique d'émission et de transmission, celui-ci comportant une source lumineuse couplée au guide d'onde multimode selon l'invention. D'une manière générale, le guide d'onde multimode selon l'invention peut présenter un intérêt dans toutes sortes de domaines, comme ceux de l'astronomie, des technologies de télémesure (par ex. LIDAR), les capteurs optiques fibrés, la microscopie optique en champ proche, les technologies optoélectroniques quantiques, etc.

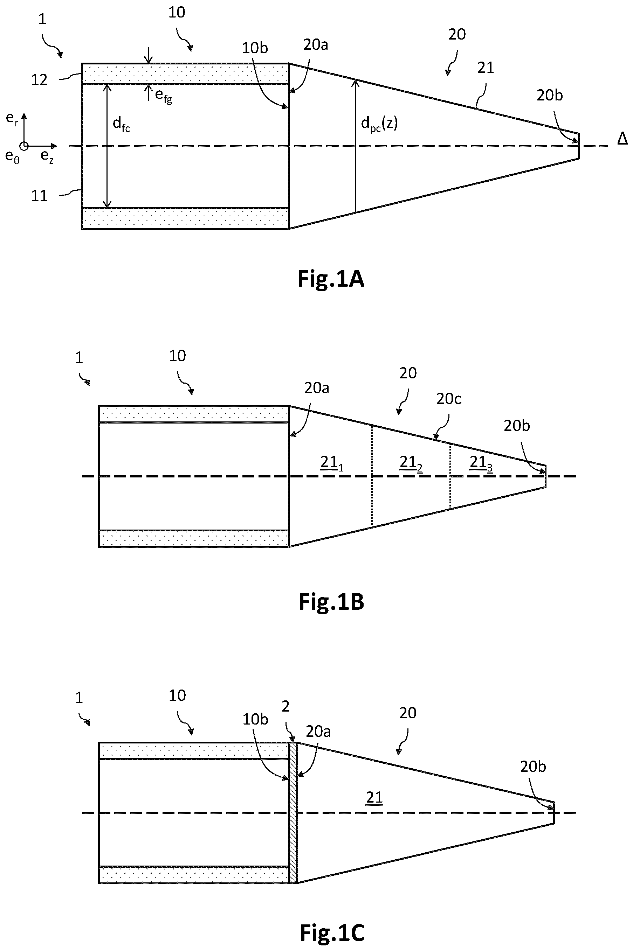

La figure 1A est une vue schématique et partielle, en coupe longitudinale, d'un guide d'onde multimode 1 selon un mode de réalisation. Les figures 1B à 1E illustrent différentes variantes du guide d'onde multimode 1 illustré sur la fig.1A. Comme mentionné précédemment, le guide d'onde multimode 1 comporte une fibre optique multimode 10 couplée optiquement et assemblée à une structure tronconique de concentration 20.

On définit ici et pour la suite de la description un repère direct tridimensionnel orthogonal (eᵣ ; e_{θ} ; e_{z}) en coordonnées cylindriques, où la direction e_{z} est parallèle à l'axe longitudinal de la fibre optique multimode 10, qui définit ici l'axe optique Δ du guide d'onde multimode 1, et est orientée en direction de la face de sortie 20b de la structure de concentration 20, et où la direction eᵣ est la direction radiale à partir de l'axe Δ. Les termes « amont » et « aval » s'entendent comme étant relatifs à un positionnement croissant suivant la direction e_{z}.

La fibre optique multimode 10 est un guide d'onde s'étendant longitudinalement suivant un axe optique Δ entre une première face dite amont (non représentée) destinée à recevoir un signal optique à transmettre, et une deuxième face 10b dite aval par laquelle la fibre optique multimode 10 est couplée optiquement et assemblée à la structure tronconique de concentration 20. La face aval 10b est de préférence orthogonale à l'axe optique Δ.

Elle est formée en un cœur 11 réalisé en au moins un matériau d'indice de réfraction n_{fc} entouré d'une gaine 12 réalisée en un milieu de plus bas indice de réfraction n_{fg}, ici un matériau solide. On considère ici que l'indice de réfraction n_{fc} est une valeur de référence vis-à-vis de laquelle nous définissons un indice de réfraction plus faible (celui de la gaine 12) et un indice de réfraction plus élevé (celui de la structure de concentration 20). Dans cet exemple, la fibre optique multimode 10 est une fibre à saut d'indice, dans le sens où les indices de réfraction n_{fc} et n_{fg} sont constants. En variante, la fibre optique multimode 10 peut être une fibre à gradient d'indice où l'indice de réfraction n_{fc} du cœur 11 varie suivant la direction radiale eᵣ.

D'une manière générale, le cœur 11 présente une dimension transversale d_{fc} suivant l'axe eᵣ (et donc une dimension radiale r_{fc} à partir de l'axe optique Δ), et la gaine présente une épaisseur e_{fg}. Dans cet exemple, la fibre optique multimode 10 présente une forme cylindrique de révolution. Sa section droite est donc de forme circulaire sur tout le long de l'axe optique Δ. D'autres formes de la section droite de la fibre optique multimode sont possibles, comme une forme ovale ou polygonale. Dans ce cas, on définit la dimension transversale d_{fc} comme étant le diamètre d'un disque centré sur l'axe optique Δ et présentant la même surface que la section droite considérée.

Le caractère multimode de la fibre optique 10 résulte de son ouverture numérique élevée et de sa dimension radiale r_{fc} qui est supérieure à la longueur d'onde λ du signal optique guidé. En effet, il est connu que la fibre optique présente un régime multimodal lorsque la fréquence normalisée V, définie ainsi : V=(2π/λ)×r_{fc}×ON, est supérieure à 2.4. De préférence, la fibre optique est ici fortement multimode, c'est-à-dire que la fréquence normalisée V est au moins égale à 10, voire à 50 ou à 100, et est de préférence égale à plusieurs centaines. L'ouverture numérique ON est égale à la racine carrée de la différence du carré des indices de réfraction n_{fc}, n_{fg} (c'est-à-dire : ON = √(n_{fc}² - n_{fg}²)). De plus, la dimension radiale r_{fc} est supérieure ou égale à la longueur d'onde λ, par exemple dix fois supérieure ou davantage. Ainsi, le rayon r_{fc} peut être de l'ordre de plusieurs microns à plusieurs centaines de microns.

A titre d'exemple, pour une longueur d'onde λ du signal optique égale à 1.55µm, la fibre optique multimode 10 peut présenter un diamètre d_{fc} de 300µm et être réalisée en un cœur de silice d'indice n_{fc} égal à 1.54 et en un matériau de gaine d'indice n_{fg} égal à 1.46. La fibre optique multimode présente alors une ouverture numérique égale à 0.5 environ, et une fréquence normalisée V égale à 300 environ, traduisant le fait que la fibre optique est alors fortement multimode. En effet, le nombre N de modes supportés par la fibre optique multimode 10 est habituellement défini comme étant proportionnel au carré de la fréquence normalisée V. Par la suite, on considère que le nombre N de modes supportés est sensiblement égal à 4V²/π² de sorte que nous avons ici 35500 modes environ.

Le guide d'onde comporte également une structure de concentration 20, couplée optiquement et assemblée à la fibre optique multimode 10. Cette structure de concentration 20 est un concentrateur spatial multimode, dans le sens où il assure la concentration spatiale des modes guidés au niveau de sa face de sortie 20b, laquelle présente une taille réduite, avec des pertes optiques associées à cette concentration spatiale qui sont minimales. Il s'agit d'une structure rapportée, dans le sens où elle est réalisée de manière distincte de la fibre optique multimode 10, en un matériau de haut indice de réfraction supérieur à l'indice n_{fc}. Elle est assemblée à la face aval 10b de la fibre optique multimode 10.

La structure de concentration 20 est avant tout adaptée à guider le signal optique provenant de la fibre optique multimode 10. Elle est réalisée en au moins un matériau (cœur 21) de haut indice de réfraction n_{pc} qui est entouré sur toute sa longueur d'une gaine 22 en un milieu de bas indice de réfraction n_{pg} (comme illustré sur les fig.1A à 1E). La gaine 22 peut être un gaz, du vide, voire un ou plusieurs matériaux solides. Il comporte deux faces opposées l'une à l'autre suivant l'axe optique Δ, à savoir une face d'entrée 20a et une face de sortie 20b, lesquelles sont de préférence orthogonales à l'axe optique Δ. La face d'entrée 20a est celle par laquelle la structure de concentration 20 est couplée optiquement et assemblée à la fibre optique multimode 10, et la face de sortie 20b est celle par laquelle le signal optique est destiné à être transmis hors du guide d'onde multimode 1. Les dimensions des faces d'entrée 20a et de sortie 20b sont définies par le matériau de haut indice du cœur 21 de la structure de concentration 20. La structure de concentration 20 est par ailleurs réalisée en un ou des matériaux optiquement passifs, c'est-à-dire qu'ils ne sont pas adaptés à émettre un signal optique à la longueur d'onde de fonctionnement du guide d'onde 1.

Le ou les matériaux de la structure de concentration 20 sont transparents à la longueur d'onde λ du signal optique guidé. Le matériau de haut indice peut être cristallin, de préférence monocristallin, et peut être choisi parmi les éléments ou les composés des colonnes III, IV et V du tableau périodique. Il peut ainsi s'agir d'un élément ou d'un composé IV, ou être un composé III-V. A titre d'exemple, il peut s'agir du silicium lorsque la longueur d'onde λ est comprise entre 1.2 et 10µm, du GaAs pour la gamme spectrale 0.9-20µm, du GaP pour une longueur d'onde λ supérieure à 0.5µm, entre autres. Elle peut comporter un même matériau de haut indice, de sorte que l'indice de réfraction n_{pc} est constant dans la structure de concentration 20 entre les faces d'entrée 20a et de sortie 20b. En variante, il peut être réalisé de plusieurs segments 21ᵢ de matériaux de haut indice, agencés de manière successive suivant l'axe optique Δ. Les matériaux de haut indice des segments 21ᵢ sont alors distincts les uns des autres par leurs compositions en termes d'éléments chimiques et/ou de concentrations de ces éléments chimiques, et présentant des indices de réfraction n_{pc,i} différents. Dans ce cas, ils sont préférentiellement agencés successivement à partir de la face d'entrée 20a de sorte que l'indice de réfraction n_{pc,i} augmente en direction de la face de sortie 20b.

A ce titre, la fig.1A illustre un exemple de guide d'onde multimode 1 dans lequel la structure de concentration 20 est formée uniquement par un même matériau de haut indice, par exemple du GaAs, qui définit les faces d'entrée 20a et de sortie 20b. Il comporte une gaine formée, non pas en un matériau de bas indice, mais par exemple d'air ou de vide. La fig.1B illustre un guide d'onde multimode 1 selon une variante, qui se distingue de celui de la fig.1A essentiellement en ce que la structure de concentration 20 comporte ici plusieurs segments 21ᵢ de haut indice, ici trois segments d'indice de réfraction n_{pc,1}, n_{pc,2}, n_{pc,3} différents avec n_{pc,1}<n_{pc,2}<n_{pc,3}, agencés suivant l'axe optique Δ de sorte que le segment 21₁ d'indice n_{pc,1} définit la face d'entrée 20a, celui d'indice n_{pc,3} définit la face de sortie 20b, et celui d'indice n_{pc,2} est situé entre les deux autres.

La structure de concentration 20 est assemblée à la face aval 10b de la fibre optique multimode 10 au niveau de sa face d'entrée 20a, de manière à permettre l'injection du signal optique transmis par la fibre 10 à l'intérieur de la structure 20. La face d'entrée 20a est donc située en regard de la face aval 10b. Elle peut être assemblée par collage, éventuellement par l'intermédiaire d'un matériau adhésif ou sans matériau adhésif. Une couche intermédiaire, de préférence une couche antireflet, peut être située à l'interface entre la face aval 10b et la face d'entrée 20a. Autrement dit, la structure de concentration 20 est assemblée à la deuxième face 10b de la fibre optique multimode 10, soit par contact entre la deuxième face 10b et la face d'entrée 20a (comme illustré sur les fig.1A et 1B), soit par l'intermédiaire d'une couche antireflet 2 disposée entre la deuxième face 10b et la face d'entrée 20a (comme illustré sur la fig.1C).

A ce titre, la fig.1C illustre un guide d'onde multimode 1 selon une variante, qui se distingue de celui de la fig.1A essentiellement en ce qu'il comporte une couche antireflet 2 située entre la face aval 10b et la face d'entrée 20a. Cette couche antireflet 2 présente un indice de réfraction n_{AR} égale à √(n_{fc}×n_{pc}) environ et d'épaisseur quart-d'onde, c'est-à-dire égale à λ/(4×n_{AR}) environ. La présence d'une telle couche antireflet 2 permet de limiter les pertes optiques associées à la réflexion d'une partie du signal optique à l'interface entre la fibre optique multimode 10 et la structure de concentration 20. Il en résulte une augmentation de la puissance transmise, qui peut atteindre plus de 10%. Une telle couche antireflet 2 peut par ailleurs être réalisée en un empilement de différents matériaux, notamment de manière à réduire la dépendance chromatique de cette fonction optique d'antireflet, ce qui peut alors améliorer encore la puissance optique transmise à l'interface entre la fibre optique multimode 10 et la structure de concentration 20.

La structure de concentration 20 présente de plus une forme tronconique centrée sur l'axe optique Δ, avec une face de sortie 20b qui présente une taille inférieure à celle de la face d'entrée 20a. La structure de concentration 20 est donc coaxiale avec la fibre optique multimode 10. Comme l'illustre notamment la fig.1A, elle est de forme tronconique sur toute sa longueur entre la face d'entrée 20a et la face de sortie 20b. Elle ne comporte donc pas une partie amont qui ne serait pas tronconique, comme dans le document US2017/176697A1 mentionné précédemment. Elle est de préférence symétrique de révolution. Ainsi, le couplage direct avec la fibre optique multimode 10 et la présence d'une gaine de bas indice sur toute la longueur de la structure de concentration 20 se traduisent par une réduction les pertes optiques, notamment pour les modes optiques d'ordres les plus élevés pour lesquels le guidage est le plus difficile.

La section droite de la structure de concentration 20 peut être circulaire (cône de révolution), ovale ou polygonale ayant une symétrie de rotation autour de l'axe optique Δ, par exemple d'ordre 4. Elle est de préférence circulaire, comme la fibre optique multimode 10, mais peut être latéralement allongée pour s'adapter à la forme éventuellement allongée de la zone de détection ou de réception au niveau de laquelle est transmis le signal optique guidé.

Les faces d'entrée 20a et de sortie 20b sont reliées entre elles par une face latérale 20c (définie par le matériau de haut indice), qui présente une dimension transversale locale d_{pc}(z) suivant l'axe eᵣ, ici un diamètre (et une dimension radiale locale r_{pc}(z) à partir de l'axe optique Δ, ici un rayon). Dans le cas où la section droite de la structure de concentration 20 présente une forme autre que circulaire, la dimension transversale locale d_{pc}(z) est définie comme étant le diamètre d'un disque présentant la même surface que la section droite considérée. Le diamètre local d_{pc}(z) présente une valeur haute d_{pc,in} au niveau de la face d'entrée 20a et une valeur basse d_{pc,out} au niveau de la face de sortie 20b. La valeur d_{pc,in} est égale à la valeur d_{fc} du diamètre du cœur 11 de la fibre optique multimode 10 au niveau de la face aval 10b, ou en est supérieure de manière à permettre une bonne injection du signal optique dans la structure de concentration 20. Elle peut être de l'ordre de plusieurs dizaines à centaines de microns, par exemple être comprise entre 50 et 500µm environ. Par ailleurs, la valeur d_{pc,out} est inférieure à la valeur d_{pc,in} et peut être de l'ordre de quelques microns à quelques dizaines de microns, par exemple être comprise entre 5µm et 50µm environ. De préférence, le rapport d_{pc,in}/d_{pc,out} est supérieur ou égal à 2. Le diamètre local d_{pc}(z) varie longitudinalement de manière monotone sur au moins une partie de la longueur Lₚ de la structure de concentration 20, cette partie débouchant sur la face de sortie 20b, par exemple linéairement (affine) ou non.

Aussi, le terme 'tronconique' est à prendre au sens large, c'est-à-dire qu'il couvre à la fois une forme conique au sens strict (c'est-à-dire que la face latérale 20c est entièrement définie par une génératrice passant par un point fixe situé sur l'axe optique Δ : la variation d_{pc}(z) étant alors linéaire), tout comme il couvre une forme conique convexe (bombée) et/ou concave, la variation longitudinale d_{pc}(z) n'étant alors pas linéaire sur toute la longueur de la structure de concentration 20. Ainsi, elle présente avantageusement une variation croissante à partir de la face amont 20a (pour notamment améliorer l'injection du signal optique dans la structure de concentration 20), puis présenter une variation décroissante jusqu'à la face aval 20b.

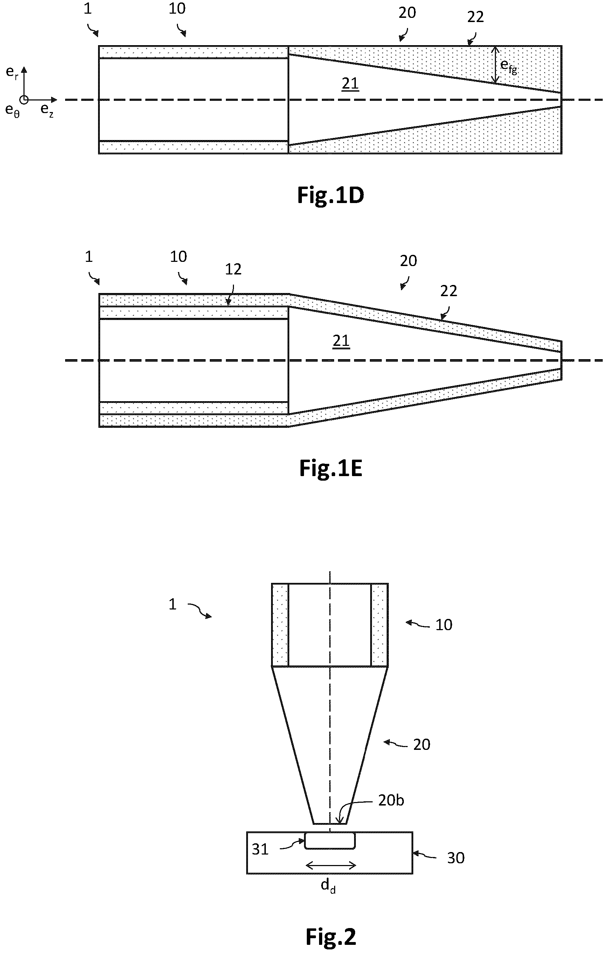

Les fig.1D et 1E illustrent des guides d'onde multimodes 1 selon deux autres variantes, qui se distinguent de celui de la fig.1A essentiellement en ce que le matériau de haut indice 21 de la structure de concentration 20 est recouvert par un matériau de bas indice n_{pg} qui forme une gaine 22. Dans le cas de la fig.1D, la gaine22 ne recouvre que le matériau de haut indice de la structure de concentration 20 et ne s'étend pas au niveau de la fibre optique multimode 10. Elle présente une épaisseur e_{pg}(z) qui augmente longitudinalement à mesure que l'on s'éloigne de la fibre optique multimode 10 de sorte que la structure de concentration 20 présente une taille latérale sensiblement constante suivant l'axe e_{z}, cette taille latérale étant ici sensiblement égale à celle de la fibre optique multimode 10. Dans le cas de la fig.1E, la gaine 22 s'étend de manière à recouvrir le matériau de haut indice de la structure de concentration 20 ainsi que la gaine 12 de la fibre optique multimode 10. Elle présente ici une épaisseur e_{pg} sensiblement constante.

La structure de concentration 20 est adaptée à concentrer spatialement, au niveau de sa face de sortie 20b, les modes optiques du signal optique provenant de la fibre optique multimode 10, c'est-à-dire à diminuer latéralement la répartition spatiale de l'intensité des modes optiques, avec des pertes optiques associées minimales.

Pour cela, la structure de concentration 20 est tout d'abord dimensionnée et réalisée de sorte que le nombre de modes N_{p,out} supportés au niveau de la face de sortie 20b est au moins égal au nombre de modes N_{f} supportés dans la fibre optique multimode 10. Autrement dit, d'une manière générale, on choisit le diamètre d_{pc,out} de la structure de concentration 20 au niveau de la face de sortie 20b ainsi que le ou les matériaux de la structure de concentration 20 (en termes d'indice de réfraction n_{pc}, n_{pg}) de sorte que le nombre de modes N_{p,out} supportés au niveau de la face de sortie 20b est au moins égal au nombre de modes N_{f} supportés dans la fibre optique multimode 10. Pour calculer le nombre de modes N_{p,out}, on peut résoudre les équations de Maxwell dans le guide d'onde 1 par simulation numérique, par exemple au moyen du logiciel FemSIM (logiciel commercial développé par la société Synopsis). Par ailleurs, dans le cas où la fréquence normalisée V est grande devant 2.4, par exemple lorsqu'elle est au moins égale à 10, il est possible de choisir le diamètre d_{pc,out} de la structure de concentration 20 ainsi que le ou les matériaux de la structure de concentration 20 (en termes d'indice de réfraction n_{pc}, n_{pg}) de sorte que la relation suivante est vérifiée : (n_{pc}² - n_{pg}²)×d_{pc,out}² ≥ (n_{fc}² - n_{fg}²)×d_{fc}², où d_{fc} est la valeur du diamètre du cœur 11 de la fibre optique multimode 10 au niveau de la face aval 10b. Cela se traduit notamment par le fait que le matériau de haut indice 21 de la structure de concentration 20 présente un indice de réfraction n_{pc} supérieur à celui du cœur 11 de la fibre optique multimode 10. De plus, le saut d'indice entre le matériau de haut indice de la structure de concentration 20 et le milieu qui l'entoure est important, par exemple supérieur à 2, voire à davantage.

Etant donné que le nombre de modes N_{p,out} au niveau de la face de sortie 20b est au moins égal au nombre de modes N_{f} supportés par la fibre optique multimode 10, et que le nombre de modes N_{p,out} est inférieur au nombre de modes N_{p,in} au niveau de la face d'entrée 20a (du fait de la diminution du diamètre d_{pc}(z)), il en résulte qu'il y a davantage de modes supportés dans la structure de concentration 20, en tout point z, que dans la fibre optique multimode 10. On évite ainsi les pertes optiques qui résulteraient d'une diminution du nombre de modes supportés entre celui N_{f} de la fibre optique multimode 10 et celui N_{p,out} à la sortie de la structure de concentration 20. A titre d'exemple, dans le cas où la fibre optique multimode 10 supporte un nombre de modes N_{f} de l'ordre de 35000 pour un rayon r_{fc} de 150µm, une structure de concentration 20 réalisée en GaAs (indice n_{pc} de 3.45 environ pour λ de 1.55µm), dont le rayon r_{pc,out} est de 25µm à la face de sortie 20b, présente un nombre de modes N_{p,out} de l'ordre de 45000, donc au moins égal à N_{f}.

De plus, la structure de concentration 20 présente une forme tronconique ayant une variation lente, qualifiée d'adiabatique par l'homme de l'art, de sa dimension transversale d_{pc}(z) entre la face d'entrée 20a (de valeur d_{pc,in}) et la face de sortie 20b (de valeur d_{pc,out}) permettant d'obtenir une modification continue de la forme des modes guidés. On évite ainsi, dans une large mesure, que de la puissance optique, injectée dans les modes guidés supportés au niveau de la face d'entrée 20a, ne soit transférée dans des modes guidés d'ordre plus élevé susceptibles de ne pas être supportés au niveau de la face de sortie 20b, du fait de la diminution du diamètre d_{pc} de la structure de concentration 20. Ainsi, une partie importante de la puissance injectée dans les modes guidés supportés au niveau de la face d'entrée 20a de la structure de concentration 20 sera transmise jusqu'à la face de sortie 20b. La variation longitudinale d_{pc}(z) est de préférence une variation continue, au sens mathématique d'une fonction continue : elle ne présente pas de discontinuité le long de la structure de concentration 20 susceptible de dégrader le caractère adiabatique de la propagation des modes guidés. Par discontinuité, on entend ici une variation brutale et sensible de la dimension transversale d_{pc}(z) (par ex. une marche d'escalier) au niveau de la face latérale 10c, d'une valeur par exemple au moins égale à λ/(50×n_{pc}). Cette valeur est bien entendu à opposer aux petites discontinuités, négligeables d'un point de vue optique, inhérente à la fabrication de la structure de concentration 20. De plus, la variation longitudinale d_{pc}(z) présente, sur tout le long de la structure de concentration 20, une pente locale qui est avantageusement inférieure ou égale, en valeur absolue, à 20°, voire à 10°, voire moins. La valeur de la pente locale est indiquée en valeur absolue, dans la mesure où elle peut être positive (variation croissante) ou négative (variation décroissante). La variation continue et la pente locale faible permettent d'obtenir et de renforcer le caractère adiabatique de la propagation des modes guidés et de leur concentration progressive le long de la structure de concentration 20.

Par ailleurs, la longueur Lₚ de la structure de concentration 20 entre les faces d'entrée 20a et de sortie 20b peut être au moins égale à deux fois le diamètre d_{fc} du cœur 11 de la fibre optique multimode 10, et de préférence au moins égale à cinq fois le diamètre d_{fc}. Bien entendu, il est possible de déterminer plus précisément la variation longitudinale d_{pc}(z) de sorte qu'elle soit dite adiabatique, de manière à limiter l'échange de puissance entre les différents modes supportés par la structure de concentration 20 lors de la propagation. Notons également que la variation adiabatique de la dimension transversale d_{pc}(z) de la structure de concentration 20 est désirée, non pas tant pour éviter le couplage intermodal en soi, mais pour éviter qu'un mode guidé ne se couple et transfère de la puissance optique à un mode d'ordre élevé qui ne serait plus supporté au niveau de la face de sortie 20b, engendrant alors des pertes optiques.

Enfin, la structure de concentration 20 est dimensionnée de sorte que la valeur d_{pc,in} du diamètre d_{pc} au niveau de la face d'entrée 20a est au moins égale à la valeur d_{fc} du cœur 11 de la fibre optique multimode 10 au niveau de la face aval 10b. Par d_{pc,in} au moins égal à d_{fc}, on entend que d_{pc,in} est au moins égal à d_{fc} à 10% près, et de préférence à 5% près. Ainsi, le signal optique guidé et confiné dans le cœur 11 de la fibre optique multimode 10 est transmis essentiellement dans le matériau de haut indice 21 de la structure de concentration 20. De préférence, la valeur d_{pc,in} du diamètre d_{pc} au niveau de la face d'entrée 20a est comprise entre la valeur d_{fc} et d_{fc}+2×e_{fg}.

Ainsi, le signal optique qui se propage dans la fibre optique multimode 10 est efficacement injecté dans la structure de concentration 20. Les modes guidés se propageant dans la fibre optique multimode 10 sont habituellement les modes hybrides EH_{l,m} ou HE_{l,m} où l est un nombre entier, et m est un entier naturel non nul. A l'interface entre la fibre optique multimode 10 et la structure de concentration 20, chaque mode supporté par la fibre optique multimode 10 se couple de préférence à un mode de même nature EH ou HE, et de mêmes indices l,m. Ce mode existe effectivement dans la structure de concentration 20 dans la mesure où le nombre N_{p,in} de modes supportés au niveau de la face d'entrée 20a est nécessairement supérieur au nombre N_{f} (l'ouverture numérique de la structure de concentration 20 étant bien supérieure à celle de la fibre optique multimode 10). L'injection du signal optique dans la structure de concentration 20 est alors particulièrement efficace, et peut être limitée essentiellement par le taux de réflexion R à l'interface, lequel peut être minimisé par la présence de la couche antireflet mentionnée plus haut. Ensuite, les modes restent guidés dans la structure de concentration 20 en direction de la face de sortie 20b, étant donné que le nombre local Nₚ(z) de modes supportés est supérieur à la valeur N_{p,out}. La variation longitudinale du diamètre d_{pc}(z) est dite adiabatique dans la mesure où elle rend adiabatique la propagation des modes guidés le long de la structure de concentration 20 : chaque mode guidé se propage en réduisant progressivement son extension transverse, c'est-à-dire en réduisant la répartition spatiale de son intensité dans le plan transversal (eᵣ,e_{θ}), et en limitant le couplage intermodal. Pour cela, comme indiqué précédemment, la variation longitudinale du diamètre d_{pc}(z) est continue et présente une pente locale inférieure ou égale, en valeur absolue, à 20° en tout point z le long de la structure de concentration 20, de préférence inférieure ou égale à 10° et de préférence encore inférieure ou égale à 5°. Au niveau de la face de sortie 20b, une partie importante du signal optique qui a été injecté est présente et concentrée spatialement. Les pertes optiques associées à la concentration spatiale du signal optique sont donc minimales.

La figure 2 est une vue schématique et partielle d'un dispositif de détection, comportant un guide d'onde multimode 1 selon l'invention, ici identique à celui illustré sur la fig.1, et un photodétecteur 30. Cette figure illustre l'une des multiples applications d'un tel guide d'onde multimode 1. Le photodétecteur 30 présente une zone de détection 31 dont la dimension latérale d_{d} est de préférence au moins égale à la dimension d_{pc,out} de la face de sortie 20b. Le photodétecteur 30 peut être de type SPAD ou SNSPD, comme mentionné précédemment, voire être un microbolomètre ou même une matrice de microbolomètre au pas de l'ordre de 10µm par exemple. Un détecteur SNSPD de photons uniques à nanofil supraconducteur est notamment décrit dans la publication de Eisaman et al. intitulé Single-photon sources and detectors, Rev. Sci. Instrum. 82, 071101 (2011). Il peut être adapté à détecter le signal optique dont la longueur d'onde λ peut être comprise dans l'infrarouge voire dans le visible. Dans cet exemple, la zone de détection 31 est formée par une jonction de type PIN. La face de sortie 20b de la structure de concentration 20 peut être placée aussi près que possible de la zone de détection 31, voire être au contact de celle-ci. Ainsi, dans le cas où la face de sortie 20b est espacée d'une distance non nulle de la surface de la zone de détection 31, cet espacement est de préférence inférieur ou égal à λ/n, où λ est la longueur d'onde du signal optique transmis puis détecté, et n est l'indice de réfraction d'un milieu situé entre la face de sortie 20b et la surface de la zone de détection 31 du photodétecteur. Un connecteur de fibre (non représenté) peut être utilisé. Une colle optique peut être utilisée pour assembler le guide d'onde multimode 1 au photodétecteur 30.

Comme mentionné précédemment, d'autres applications sont bien entendu envisageables. Ainsi, il peut s'agir de concentrer spatialement le signal optique guidé et de le transmettre en direction d'une zone d'un matériau absorbant pour l'échauffer localement. On peut ainsi étudier ses propriétés de conduction thermique, voire exploiter un effet thermoélectrique. Quoi qu'il en soit, le guide d'onde multimode 1 selon l'invention peut être associé à un photodétecteur placé en aval de la structure de concentration 20, et/ou à une source optique d'une lumière non cohérente, placée en amont de la fibre optique multimode 10.

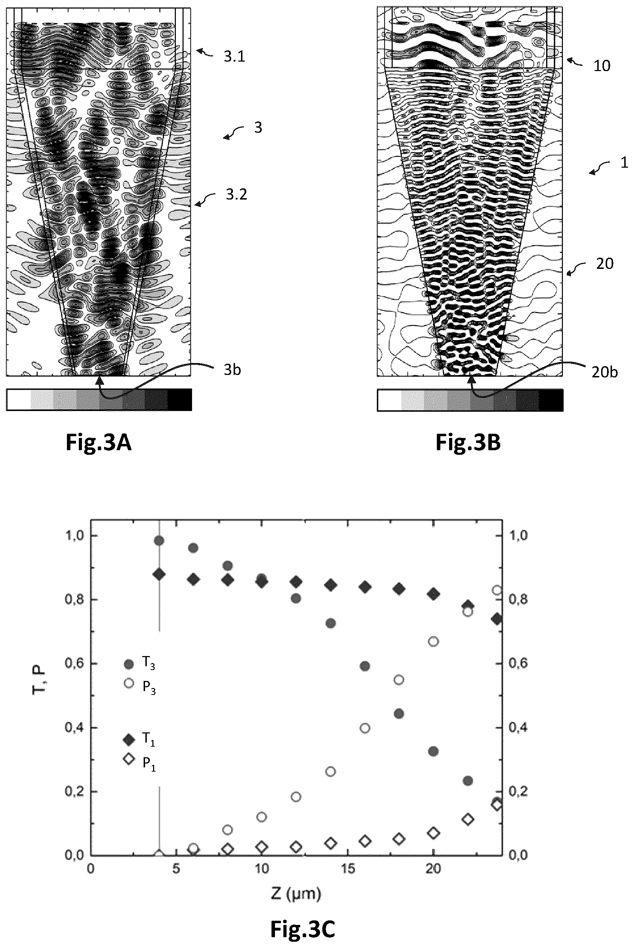

La figure 3A illustre la carte de champ en régime stationnaire d'un signal optique se propageant dans une fibre optique multimode 3 en silice effilée, réalisée d'une manière similaire aux fibres optiques monomodes en silice effilées. L'objectif ici est de montrer que le guide d'onde multimode 1 selon l'invention se distingue bien évidemment des composants optiques bien connus que sont les fibres optiques monomodes en silice effilées, mais également des fibres optiques multimodes en silice qui seraient effilées de manière similaire aux fibres optiques monomodes.

En effet, une fibre optique monomode effilée comporte généralement une première portion monomode de diamètre d_{fc} constant ne supportant qu'un seul mode optique (mode fondamental), qui se poursuit continûment par une deuxième portion dite effilée dans laquelle le cœur présente une diminution lente de son diamètre d_{fc}. Dans cette deuxième portion, en réduisant lentement le diamètre d_{fc}, on change la forme du mode dans la direction transverse : sa taille commence par se réduire, puis, lorsque le diamètre d_{fc} devient inférieur à λ/n_{fc}, le mode s'étale hors du guide tout en restant guidé. Ainsi, une fibre optique monomode effilée est utilisée pour étendre le mode guidé et non pas pour le concentrer, par exemple pour obtenir un couplage par onde évanescente avec un résonateur optique.

Dans le cas des fibres optiques multimodes (FOMM), le diamètre d_{fc} est grand devant la longueur d'onde λ du signal optique de sorte que la fibre optique supporte un nombre de modes élevé. Cependant, le fait de réduire le diamètre d_{fc} conduirait à réduire le nombre de modes supportés, une partie de la lumière injectée à l'entrée d'une telle fibre étant alors rayonnée à l'extérieure de la fibre optique voire réfléchie. Les pertes optiques associées à une telle réduction du diamètre d_{fc} sont donc particulièrement très élevées.

A ce titre, la fibre optique effilée 3 illustrée sur la fig.3A présente une première portion 3.1 cylindrique de dimension latérale constante, formée d'un cœur d'un diamètre d_{fc} de 10µm entouré d'une gaine de 0.5µm d'épaisseur. L'indice de réfraction n_{fc} du cœur (silice) étant égal à 1.54 et l'indice de réfraction n_{fg} de la gaine étant égal à 1.46, l'ouverture numérique ON est égale à 0.5. Pour un signal optique d'une longueur d'onde λ de 1.55µm, le nombre N_{f,in} de modes supportés par la fibre optique dans sa première portion 3.1 est égal à 42 env (à partir de la définition N_{f}≈4×V²/π² mentionnée plus haut). La fibre optique effilée 3 comporte une deuxième portion 3.2 tronconique dont la dimension latérale diminue de manière linéaire, cette deuxième portion 3.2 étant formée par l'effilement du cœur et de la gaine dans la même proportion, pour toute abscisse Z. Au niveau de la face de sortie 3b, le cœur présente un diamètre local de 3µm et la gaine une épaisseur de 0.15µm, la longueur de la deuxième portion 3.2 étant de 20µm.

On injecte un signal optique continu (lumière non cohérente, distribuée de façon aléatoire entre tous les modes guidés) dans la fibre optique effilée 3, et on mesure la puissance optique en régime stationnaire. Il apparaît que seuls 20% de la puissance initiale atteint la face de sortie 3b. Cela s'explique notamment par le fait que la fibre optique effilée 3 supporte un nombre N_{f,out} de modes égal à 4 environ au niveau de sa face de sortie 3b. Outre 2% de signal réfléchi, les 78% restant sont rayonnés à l'extérieur de la fibre optique effilée 3 comme le montre la carte de champ. En conséquence, une fibre optique effilée 3 ne permet pas de concentrer spatialement le signal optique d'une part, et engendre de fortes pertes optiques d'autre part.

La figure 3B illustre la carte de champ en régime stationnaire d'un signal optique se propageant dans guide d'onde multimode 1 selon un mode de réalisation de l'invention. Le guide d'onde multimode 1 présente une fibre optique multimode 10 identique à la première portion 3.1, formée d'un cœur d'un diamètre d_{fc} de 10µm entouré d'une gaine de 0.5µm d'épaisseur. L'indice de réfraction n_{fc} du cœur étant égal à 1.54 et l'indice de réfraction n_{fg} de la gaine étant égal à 1.46, l'ouverture numérique ON est égale à 0.5. Pour un signal optique d'une longueur d'onde λ de 1.55µm, le nombre N_{f} de modes supportés par la fibre optique multimode 10 est égal à 42 env. Le guide d'onde multimode 1 comporte une structure de concentration 20 présentant des dimensions latérale et longitudinale identiques à celles de la deuxième portion 3.2 (en considérant le cœur et la gaine de cette portion 3.2). Elle est réalisée en GaAs d'indice de réfraction n_{pc} de 3.45 environ, entouré d'air (n_{pg}=1). Au niveau de la face de sortie 20b, le matériau de haut indice présente un diamètre local de 3.3µm, de sorte que le nombre N_{f,out} de modes supportés à la face de sortie 20b est égal à 190 environ.

On injecte le signal optique (lumière non cohérente) dans le guide d'onde multimode 1, et on mesure la puissance optique en régime stationnaire. Il apparaît que près de 73% de la puissance du signal optique est mesuré à la face de sortie 20b, montrant une réduction importante des pertes optiques, en comparaison à la fibre optique effilée 3. Par ailleurs, près de 12% du signal optique est réfléchi à l'interface entre la fibre optique multimode 10 et la structure de concentration 20, en accord avec le coefficient de Fresnel pour la puissance réfléchie. Cette valeur peut être fortement diminuée avec l'utilisation d'une couche antireflet. Quoi qu'il en soit, il apparaît qu'un tel guide d'onde 1 permet d'assurer une concentration spatiale des modes guidés au niveau de la face de sortie 20b, et ceci avec les pertes optiques associées à une telle concentration qui sont minimales, ici de l'ordre de 17% seulement (définies à partir du rapport des 73% transmis sur les 88% injectés dans la structure de concentration 20). La carte de champ illustrée sur la fig.3B montre bien, en comparaison à la fig.3A, une forte diminution des pertes optiques liées au rayonnement de la lumière hors de la structure de concentration 20.

La figure 3C illustre l'évolution longitudinale des coefficients de transmission T(z) et de pertes optiques P(z) associées à la partie effilée 3.2 de la fibre optique multimode 3 illustrée sur la fig.3A, et à la structure de concentration 20 du guide d'onde 1 illustré sur la fig.3B. Le coefficient de transmission T(z) est défini comme étant égal à la puissance mesurée normalisée par la puissance injectée dans la fibre 3.1 (fig.3A) ou dans fibre 10 (fig.3B), en fonction de la position z le long de la partie effilée 3.2 (fig.3A) ou le long de la structure de concentration 20 (fig.3B). Par ailleurs, le coefficient de pertes optiques P(z) est défini comme étant égal à 1-T(z)/(1-R) : il s'agit des pertes optiques associées à la concentration spatiale des modes guidés. On note T₁ et P₁ les coefficients associés au guide d'onde 1, et on note T₃, P₃ les coefficients associés à la fibre optique multimode 3.

Si l'on considère le coefficient de transmission T₃(z) de la fibre optique 3, il présente une valeur élevée à l'entrée de la partie effilée 3.2 dans la mesure où il y a très peu de réflexion entre la partie droite 3.1 et la partie effilée 3.2 qui sont toutes les deux réalisées en silice. Cependant, il chute ensuite fortement à mesure que l'on se rapproche de la face de sortie 3b (une grande partie de la lumière est rayonnée à l'extérieur). Les pertes optiques P₃(z) sont distribuées tout le long de la partie effilée 3.2 et atteignent une valeur totale de 80% environ au niveau de la face 3b.

En revanche, le guide d'onde 1, bien qu'ayant des pertes par réflexion à l'interface silice/GaAs (ces pertes pouvant toutefois être minimisées notamment par l'emploi d'une couche antireflet), présente un coefficient de transmission T₁(z) qui reste à une valeur particulièrement élevée jusqu'à la face de sortie 20b. Les pertes optiques P₁(z) restent particulièrement faibles le long de la structure de concentration 20, et atteignent ici un total de 17% seulement au niveau de la face 20b. En effet, la lumière se propageant dans la structure de concentration 20 est très peu rayonnée à l'extérieur et est efficacement concentrée spatialement.

Par ailleurs, le tableau ci-dessous montre l'évolution du coefficient de transmission T du guide d'onde 1 au niveau de la face de sortie 20b, et du taux de réflexion R à l'interface fibre 10 / structure 20, en fonction de la longueur Lₚ de la structure de concentration 20. On considère ici que le diamètre d_{fc} du cœur 11 de la fibre optique multimode 10 est égal à 3µm, et que sa gaine 12 a 0.5 µm d'épaisseur. La structure de concentration 20 est réalisée en GaAs et est tronconique à symétrie de rotation, et présente une variation longitudinale linéaire du diamètre d_{pc} de 4µm à 1µm. On indique également les pertes optiques P associées à la concentration spatiale des modes guidés, définies telles que P = 1-T/(1-R)).

| **Lₚ (µm)** | **3** | **5** | **10** | **15** | **20** | **25** | **30** |
|---|---|---|---|---|---|---|---|
| Lₚ/d_{fc} | 1 | 1.7 | 3.3 | 5 | 6.7 | 8.3 | 10 |
| T (%) | 50 | 63 | 71 | 74 | 75 | 75 | 75 |
| R (%) | 20 | 18 | 14 | 14 | 14 | 14 | 14 |
| P (%) | 37 | 23 | 17 | 14 | 13 | 13 | 13 |

Il apparaît que, au premier ordre, une longueur Lₚ de la structure de concentration 20 au moins égale à 2 fois le diamètre d_{fc} du cœur 11 de la fibre optique multimode 10 (correspondant à une pente locale constante de 15° en valeur absolue) permet de limiter les pertes optiques P associées à la concentration spatiale des modes guidés par la structure de concentration 20, lesquelles sont ici inférieures à 20%. De préférence, la longueur Lₚ est au moins égale à 5 fois le diamètre d_{fc} (ce qui correspond à une pente locale constante de 6° en valeur absolue).

Notons enfin que l'on peut définir un facteur de concentration de l'intensité lumineuse F tel que T×d_{pc,out}²/d_{pc,in}² (l'intensité est la puissance lumineuse divisée par la surface, d'où ce facteur de concentration F, qui est un nombre sans dimension). Il apparaît que ce facteur de concentration F peut être nettement supérieur à 1, tout en minimisant les pertes optiques P associées à la concentration spatiale des modes guidés. A ce titre, le tableau ci-dessous montre l'évolution du facteur de concentration F et des pertes optiques P pour différentes valeurs du diamètre d_{pc,out} de la structure de concentration 20 au niveau de la face de sortie 20b. Dans cet exemple, le guide d'onde multimode 1 comporte une fibre optique multimode 10 dont le cœur présente un diamètre d_{fc} de 6µm et dont la gaine présente une épaisseur e_{fg} de 1µm. On montre facilement par simulation numérique qu'elle supporte un nombre N_{f} de modes guidés égal à 20. La structure de concentration 20 est réalisée en GaAs (matériau de haut indice) entouré d'air. Elle présente un diamètre d_{pc,in} de 8µm au niveau de la face d'entrée 20a et une longueur Lₚ de 20µm. Dans ce tableau, le nombre de modes guidés N_{p,out} ayant une astérisque est le nombre exact calculé à partir de la résolution des équations de Maxwell par simulation numérique, alors que le nombre sans astérisque a été estimé à partir de la relation N_{p,out} = 4×V²/π².

| **d_{pc,out} (µm)** | **3** | **3+AR** | **2.5** | **2.5+AR** | **2** | **2+AR** | **1.5** | **1** | **0.75** | **0.5** |
|---|---|---|---|---|---|---|---|---|---|---|
| N_{p,out} | 160 | | 110 | | 78 | | 45* | 22* | 12* | 4* |
| T (%) | 78 | 91 | 65 | 75 | 48 | 55 | 31 | 15 | 9 | 2.5 |
| R (%) | 14 | 2 | 14 | 2 | 24 | 15 | 30 | 36 | 43 | 43 |
| F | 5.4 | 6.3 | 6.6 | 7.7 | 7.7 | 8.7 | 8.8 | 10.2 | 10.3 | 6 |
| P (%) | 9 | 7 | 24 | 23 | 37 | 35 | 55 | 76 | 84 | 96 |

Il en résulte que le facteur de concentration F est élevé pour un diamètre de sortie d_{pc,out} inférieur à 3µm. De plus, les pertes optiques P liées à la concentration spatiale sont particulièrement faibles pour d_{pc,out} voisin de 3µm. Evidemment, les pertes optiques P sont très fortes lorsque la condition N_{p,out} > N_{f} n'est pas satisfaite, c'est-à-dire pour d< 1µm. Pour d>1µm (pour laquelle la condition est bien satisfaite), on note que les pertes optiques P augmentent à mesure que le diamètre de sortie d_{pc,out} diminue, dans la mesure où il est difficile d'être adiabatique pour les modes guidés d'ordre élevé. Aussi, de préférence, on dimensionne le guide d'onde 1 de sorte que le nombre N_{p,out} soit très supérieur à N_{f}, par exemple au moins 5 fois, voire au moins 10 fois supérieur. Notons qu'un calcul similaire appliqué à une fibre optique multimode effilée 3 telle que décrite précédemment montre que le facteur de concentration F reste voisin de l'unité pour toute la gamme du diamètre de sortie d_{pc,out}, et que les pertes optiques P sont particulièrement élevées.

Par ailleurs, comme indiqué précédemment, la variation longitudinale de la dimension transversale d_{pc}(z) du matériau de haut indice de la structure de concentration 20 est décroissante de manière monotone sur au moins une partie de la longueur Lₚ (débouchant alors sur la face de sortie 20b), et peut ne pas être linéaire. Considérons alors les performances optiques de la structure de concentration 20 dans le cas où la variation longitudinale d_{pc}(z) présente une déviation parabolique par rapport à une variation longitudinale linéaire (cône de révolution). Dans ces exemples, la structure de concentration 20 est réalisée en GaAs entouré d'air, et présente un diamètre d'entrée d_{pc,in} de 8µm, un diamètre de sortie d_{pc,out} de 2µm et une longueur Lₚ de 20µm.

Dans le cas d'une déviation parabolique δ de +0.5µm mesurée à Lₚ/2 (forme convexe, ou bombée), la structure de concentration 20 présente un taux de transmission T de 56%, un taux de réflexion R de 18%, se traduisant par un facteur de concentration F de 9, et des pertes optiques P associées à la concentration spatiale de 31%. Une déviation parabolique δ de +2µm améliore les performances optiques, dans la mesure où le taux de transmission T est de 72%, le taux de réflexion R de 16%, ce qui se traduit par un facteur de concentration F de 11 et des pertes optiques P associées à la concentration spatiale de 14% seulement. Notons que dans cet exemple, la variation longitudinale d_{pc}(z) n'est pas monotone sur toute la longueur Lₚ de la structure de concentration 20 : elle commence par augmenter de 8µm à 8.2µm, puis décroît de manière monotone jusqu'à 2µm.

Comme mentionné plus haut, la face de sortie 20b peut ne pas être circulaire ou polygonale, mais ovale ou elliptique. A titre d'exemple, une structure de concentration 20 avec une face de sortie 20b elliptique dont le grand axe a est égal à 2×√2 et le petit axe b est égal à √2 (donnant ainsi une surface identique à celle d'une face de sortie 20b circulaire de 2µm de diamètre) montre de bonnes performances optiques en termes de transmission (T=52%) et de concentration (F=8). Les pertes optiques sont limitées suivant le grand axe mais sont un peu plus élevées suivant le petit axe.

Notons que ces simulations ont été réalisées à titre d'exemple pour des structures de concentration supportant un nombre relativement petit de modes optiques guidés (quelques dizaines), pour lesquelles des calculs numériques tridimensionnels très précis peuvent être réalisés. Les principes physiques validés par ces calculs s'appliquent de la même manière au cas des structures de concentration de plus gros diamètre, supportant beaucoup plus de modes guidés, par exemple au moins 1000 voire davantage.

Un exemple de procédé de réalisation d'un guide d'onde multimode 1 tel qu'illustré sur la figure 1 est maintenant décrit. Ce procédé permet en particulier de réaliser une structure de concentration 20 présentant une symétrie axiale (cône de révolution), la variation longitudinale souhaitée de la dimension transversale d_{pc}(z), ainsi qu'une rugosité de surface suffisamment faible pour limiter le couplage intermodal.

Tout d'abord, le matériau de haut indice 21 de la structure de concentration 20 est choisi, compte tenu de la valeur souhaitée d_{pc,out} de la dimension transversale d_{pc} au niveau de la face de sortie 20b. Le matériau de haut indice 21 est transparent à la longueur d'onde de travail, et de préférence cristallin, et avantageusement monocristallin, et peut être choisi notamment parmi le silicium, le GaAs, le GaP, entre autres, en fonction de la longueur d'onde λ du signal optique à guider. Un tel matériau est habituellement disponible sous forme de plaque épaisse (*wafer,* en anglais) d'une épaisseur de plusieurs centaines de microns. Considérons à titre d'exemple que le matériau de haut indice choisi est le GaAs.

On amincit ensuite le wafer de GaAs pour obtenir une épaisseur finale égale ou légèrement supérieure à la dimension radiale maximale de la structure de concentration 20, par exemple égale au diamètre d_{pc,in} au niveau de la face d'entrée 20a. L'amincissement peut être effectué par polissage mécanochimique, entre autres.

On réalise ensuite des portions parallélépipédiques de GaAs, distinctes les unes des autres, par clivage du wafer de GaAs. Les portions parallélépipédiques présentent ainsi une section droite de forme carrée et une longueur égale à la longueur Lₚ souhaitée de la structure de concentration 20.

On assemble ensuite la portion parallélépipédique à la face aval 10b d'une fibre optique multimode 10, par exemple au moyen d'une colle optique. Une couche antireflet peut avoir été réalisée, au préalable, sur la face d'entrée 20a de la portion parallélépipédique.

On usine ensuite la portion parallélépipédique de manière à obtenir la structure de concentration 20 présentant la variation longitudinale d_{pc}(z) souhaitée. Un tel usinage peut être réalisé par faisceau d'ions focalisés (FIB, pour *Focused Ion Beam*). Une telle technique permet d'obtenir une forme présentant une symétrie de rotation ou de révolution, ainsi qu'une faible rugosité de surface. Notons que la portion parallélépipédique peut également être usinée avant l'étape d'assemblage sur l'extrémité de la fibre optique multimode 10. Une technique « d'usinage » par gravure chimique humide peut également être utilisée, en particulier lorsqu'on souhaite obtenir une forme axisymétrique, par exemple en plongeant la portion parallélépipédique fixée à l'extrémité d'un support ou de la fibre optique multimode 10 dans une solution d'un agent de gravure.

Une gaine en un matériau de bas indice peut ensuite être réalisée de manière à recouvrir le matériau de haut indice de la structure de concentration 20. La présence de cette gaine peut participer à améliorer la tenue mécanique de la structure de concentration 20, voire également aider à positionner la face de sortie 20b de la structure de concentration 20 vis-à-vis d'une zone de détection ou de réception du signal optique alors transmis par le guide d'onde multimode 1.

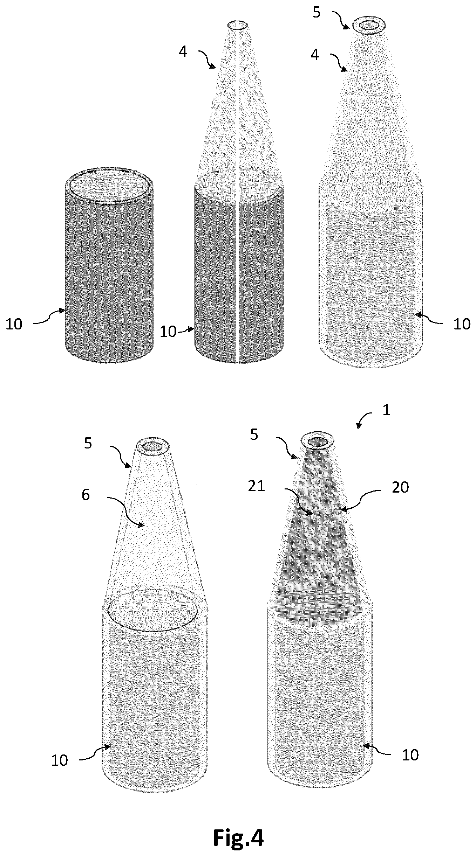

D'autres procédés de réalisation de la structure de concentration 20 sont également possibles. A titre d'exemple, elle peut être réalisée en utilisant une étape de construction positive suivie d'une étape de double inversion. Ce procédé est illustré sur la figure 4.

Une portion tronconique 4 en résine polymère est réalisée à l'extrémité de la fibre optique multimode 10. La portion tronconique 4 est obtenue par écriture directe au laser (DLW, pour *Direct Laser Writing*). Elle présente les dimensions latérale et longitudinale de la structure de concentration 20 souhaitée.

On encapsule ensuite la portion tronconique 4 ainsi que la fibre optique multimode 10 dans une couche d'encapsulation 5, par exemple en un oxyde de silicium, déposée par exemple par dépôt par voie chimique (CVD, pour *Chemical Vapor Deposition*).

On supprime ensuite, par gravure sélective, la portion tronconique 4 en résine. La couche d'encapsulation 5 forme alors un moule qui permettra de réaliser la structure de concentration 20.

Enfin, la structure de concentration 20 est réalisée par dépôt, par exemple CVD, du matériau de haut indice 21 dans l'espace libre 6 délimité par la couche d'encapsulation 5. Celle-ci peut être conservée, formant ainsi une gaine de bas indice de la structure de concentration 20.

Des modes de réalisation particuliers viennent d'être décrits. Différentes variantes et modifications apparaîtront à l'homme du métier.

## Revendications

1. Guide d'onde multimode (1), comportant :
∘ une fibre optique multimode (10), comportant un cœur (11) réalisé en un matériau d'indice de réfraction n_{fc} et présentant une dimension transversale d_{fc}, entouré d'une gaine (12) en un milieu d'indice de réfraction n_{fg} inférieur à n_{fc} ; et s'étendant longitudinalement suivant un axe optique Δ entre une première face destinée à recevoir un signal optique, et une deuxième face (10b) opposée destinée à transmettre le signal optique ;
∘ une structure de concentration (20) :
• présentant une face d'entrée (20a) par laquelle la structure de concentration (20) est couplée optiquement et une face de sortie (20b) opposée présentant une surface inférieure à celle de la face d'entrée (20a),
• de forme tronconique centrée sur l'axe optique Δ, sur toute sa longueur entre la face d'entrée (20a) et la face de sortie (20b),
• présentant une dimension transversale locale d_{pc}, dont la valeur d_{pc,in} au niveau de la face d'entrée (20a) est au moins égale à une valeur d_{fc} de la dimension transversale d_{fc} du cœur (11) de la fibre optique multimode (10) au niveau de la deuxième face (10b) ;
• entourée sur toute sa longueur d'un milieu d'indice de réfraction n_{pg} inférieur à n_{pc};
• assemblée à la deuxième face (10b) de la fibre optique multimode (10), soit par contact entre la deuxième face (10b) et la face d'entrée (20a), soit par l'intermédiaire d'une couche antireflet (2) disposée entre la deuxième face (10b) et la face d'entrée (20a) ;
∘ **caractérisé en ce que** la structure de concentration (20) est :
• réalisée en un matériau de haut indice de réfraction n_{pc} supérieur à n_{fc} ;
• présentant une variation adiabatique de sa dimension transversale locale d_{pc} allant de la valeur d_{pc,in} à une valeur d_{pc,out} au niveau de la face de sortie (20b) ;
• configurée de sorte que le nombre de modes optiques supportés au niveau de la face de sortie (20b) est au moins égal au nombre de modes optiques supportés par la fibre optique multimode (10).

2. Guide d'onde multimode (1) selon la revendication 1, dans lequel la différence (n_{pc} - n_{pg}) est supérieure à 2.

3. Guide d'onde multimode (1) selon la revendication 1 ou 2, dans lequel la structure de concentration (20) est symétrique de révolution.

4. Guide d'onde multimode (1) selon l'une quelconque des revendications 1 à 3, dans lequel la structure de concentration (20) est configurée de sorte que la relation (n_{pc}² - n_{pg}²)×d_{pc,out}² ≥ (n_{fc}² - n_{fg}²)×d_{fc}² est vérifiée.

5. Guide d'onde multimode (1) selon l'une quelconque des revendications 1 à 4, dans lequel le matériau de haut indice de la structure de concentration (20) est un matériau semiconducteur cristallin.

6. Guide d'onde multimode (1) selon l'une quelconque des revendications 1 à 5, dans lequel le matériau de haut indice de la structure de concentration (20) est un élément ou un composé IV, ou est un composé III-V.

7. Guide d'onde multimode (1) selon l'une quelconque des revendications 1 à 6, dans lequel la structure de concentration (20) présente une variation longitudinale d_{pc}(z) continue de la dimension transversale d_{pc}.

8. Guide d'onde multimode (1) selon la revendication 7, dans lequel la variation longitudinale d_{pc}(z) de la dimension transversale d_{pc} présente sur toute sa longueur une pente locale inférieure ou égale, en valeur absolue, à 20°.

9. Guide d'onde multimode (1) selon la revendication 7 ou 8, dans lequel la variation longitudinale d_{pc}(z) de la dimension transversale d_{pc} est décroissante sur au moins une partie de la structure de concentration (20) débouchant sur la face aval (20b).

10. Guide d'onde multimode (1) selon l'une quelconque des revendications 7 à 9, dans lequel la variation longitudinale d_{pc}(z) de la dimension transversale d_{pc} est croissante sur une partie de la structure de concentration (20) s'étendant à partir de la face amont (20a).

11. Guide d'onde multimode (1) selon l'une quelconque des revendications 1 à 10, dans lequel la structure de concentration (20) présente une longueur Lₚ au moins égale à deux fois la valeur d_{fc} de la dimension transversale d_{fc} du cœur (11) de la fibre optique multimode (10) au niveau de la deuxième face (10b).

12. Guide d'onde multimode (1) selon l'une quelconque des revendications 1 à 11, dans lequel le rapport d_{pc,in}/d_{pc,out} est supérieur ou égal à 2.

13. Dispositif d'émission lumineuse, comportant une source lumineuse et le guide d'onde multimode (1) selon l'une quelconque des revendications 1 à 12, le guide d'onde multimode (1) étant couplé optiquement à la source lumineuse par la première face de la fibre optique multimode (10).

14. Dispositif de photodétection, comportant un photodétecteur et le guide d'onde multimode (1) selon l'une quelconque des revendications 1 à 12, le guide d'onde multimode étant destiné à transmettre par la face de sortie (20b) un signal optique de longueur d'onde λ en direction du photodétecteur, la face de sortie (20b) étant au contact d'une surface de réception du photodétecteur destinée à recevoir le signal optique, ou en est espacée d'une distance inférieure ou égale à λ/n, où n étant l'indice de réfraction d'un milieu situé entre la face de sortie (20b) et la surface de réception du photodétecteur.

15. Procédé de fabrication d'un guide d'onde multimode (1) selon l'une quelconque des revendications 1 à 12, comportant les étapes suivantes :
∘ réalisation d'au moins une portion parallélépipédique en le matériau de haut indice de la structure de concentration (20), à partir d'un wafer du même matériau ;
∘ assemblage de la portion parallélépipédique à la deuxième face (10b) de la fibre optique multimode (10) ;
∘ usinage de la portion parallélépipédique de manière à obtenir la variation adiabatique de la dimension transversale locale d_{pc} de la portion parallélépipédique, obtenant ainsi la structure de concentration (20).

16. Procédé de fabrication d'un guide d'onde multimode selon l'une quelconque des revendications 1 à 12, comportant les étapes suivantes :
∘ réalisation d'une portion tronconique (3) sur la deuxième face (10b) de la fibre optique multimode (10) ;
∘ dépôt d'une couche d'encapsulation (4) recouvrant au moins la portion tronconique (3) ;
∘ suppression de la portion tronconique (3) par gravure sélective du matériau de celle-ci, libérant ainsi un espace vide (6) délimité par la couche d'encapsulation (5) ;
∘ dépôt du matériau de haut indice (21) de la structure de concentration (20) remplissant ainsi l'espace vide (6), et formant ainsi la structure de concentration (20).

## Patentansprüche

1. Multimode-Wellenleiter (1), der Folgendes aufweist:
∘ einen Multimodus-Lichtwellenleiter (10), der einen Kern (11) aufweist, der aus einem Material mit einem Brechungsindex n_{fc} hergestellt ist und eine Querschnittsabmessung d_{fc} besitzt, der von einem Mantel (12) aus einem Medium mit einem Brechungsindex n_{fg} umgeben ist, der kleiner als n_{fc} ist; und die sich längs entlang einer optischen Achse Δ zwischen einer ersten Seite, die zum Empfangen eines optischen Signals bestimmt ist, und einer zweiten, gegenüberliegenden Seite (10b), die zum Übertragen des optischen Signals bestimmt ist, erstreckt;
∘ eine Konzentrationsstruktur (20):
• die eine Eingangsseite (20a), über die die Konzentrationsstruktur (20) optisch gekoppelt ist, und eine gegenüberliegende Ausgangsseite (20b) besitzt, die eine kleinere Oberfläche besitzt als die der Eingangsseite (20a),
• kegelförmig, zentriert auf der optischen Achse Δ, über ihre gesamte Länge zwischen der Eingangsseite (20a) und der Ausgangsseite (20b),
• die eine lokale Querschnittsabmessung d_{pc} besitzt, dessen Wert d_{pc,in} an der Eingangsseite (20a) mindestens gleich einem Wert d_{fc} der Querschnittsmessung d_{fc} des Kerns (11) des Multimodus-Lichtwellenleiters (10) an der zweiten Seite (10b) ist;
• die über die gesamte Länge von einem Medium mit einem Brechungsindex n_{pg} umgeben ist, der kleiner als n_{pc} ist;
• die mit der zweiten Seite (10b) des Multimodus-Lichtwellenleiters (10) zusammengefügt ist, entweder durch Kontakt zwischen der zweiten Seite (10b) und der Eingangsseite (20a) oder über eine zwischen der zweiten Seite (10b) und der Eingangsseite (20a) angeordnete Antireflexschicht (2);
∘ **dadurch gekennzeichnet, dass** die Konzentrationsstruktur (20):
• aus einem Material mit einem hohen Brechungsindex n_{pc} über n_{fc} hergestellt wird;
• eine adiabatische Änderung seiner lokalen Querschnittsabmessung d_{pc} in dem Bereich von dem Wert d_{pc,in} zu einem Wert d_{pc,out} an der Ausgangsseite (20b) aufweist;
• die so konfiguriert ist, dass die Anzahl der an der Ausgangsseite (20b) unterstützten optischen Moden mindestens gleich der Anzahl der von dem Multimodus-Lichtwellenleiter (10) unterstützten optischen Moden ist.

2. Multimode-Wellenleiter (1) nach Anspruch 1, wobei die Differenz (n_{pc} - n_{pg}) größer ist als 2.

3. Multimode-Wellenleiter (1) nach Anspruch 1 oder 2, wobei die Konzentrationsstruktur (20) umdrehungssymmetrisch ist.

4. Multimode-Wellenleiter (1) nach einem der Ansprüche 1 bis 3, wobei die Konzentrationsstruktur (20) so konfiguriert ist, dass das Verhältnis (n_{pc}² - n_{pg}²)xd_{pc,out}²≥ (n_{fc}² - n_{fg}²)×d_{fc}² überprüft wird.

5. Multimode-Wellenleiter (1) nach einem der Ansprüche 1 bis 4, wobei das hochindexierte Material der Konzentrationsstruktur (20) ein kristallines Halbleitermaterial ist.

6. Multimode-Wellenleiter (1) nach einem der Ansprüche 1 bis 5, wobei das hochindexierte Material der Konzentrationsstruktur (20) ein IV-Element oder eine IV-Verbindung oder eine III-V-Verbindung ist.

7. Multimode-Wellenleiter (1) nach einem der Ansprüche 1 bis 6, wobei die Konzentrationsstruktur (20) eine kontinuierliche Längsänderung d_{pc}(z) der Querschnittsabmessung d_{pc} besitzt.

8. Multimode-Wellenleiter (1) nach Anspruch 7, wobei die Längsänderung d_{pc}(z) der Querschnittsabmessung d_{pc} über ihre gesamte Länge eine lokale Steigung besitzt, deren Absolutwert kleiner oder gleich 20° ist.

9. Multimode-Wellenleiter (1) nach Anspruch 7 oder 8, wobei die Längsänderung d_{pc}(z) der Querschnittsabmessung d_{pc} über mindestens einem Teil der Konzentrationsstruktur (20), die in der nachgelagerten Seite (20b) mündet, abnehmend ist.

10. Multimode-Wellenleiter (1) nach einem der Ansprüche 7 bis 9, wobei die Längsänderung d_{pc}(z) der Querschnittsabmessung d_{pc} über einem Teil der Konzentrationsstruktur (20), die sich von der vorgelagerten Seite (20a) erstreckt, zunehmend ist.

11. Multimode-Wellenleiter (1) nach einem der Ansprüche 1 bis 10, wobei die Konzentrationsstruktur (20) eine Länge Lₚ besitzt, die mindestens dem Doppelten des Wertes d_{fc} der Querschnittsabmessung d_{fc} des Kerns (11) des Multimodus-Lichtwellenleiters (10) auf der zweiten Seite (10b) entspricht.

12. Multimode-Wellenleiter (1) nach einem der Ansprüche 1 bis 11, wobei das Verhältnis d_{pc,in}/d_{pc,out} größer oder gleich 2 ist.

13. Lichtsendevorrichtung, die eine Lichtquelle und den Multimode-Wellenleiter (1) nach einem der Ansprüche 1 bis 12 aufweist, wobei der Multimode-Wellenleiter (1) durch die erste Seite des Multimodus-Lichtwellenleiters (10) optisch mit der Lichtquelle gekoppelt ist.

14. Photodetektionsvorrichtung, die einen Photodetektor und den Multimode-Wellenleiter (1) nach einem der Ansprüche 1 bis 12 aufweist, wobei der Multimode-Wellenleiter dazu bestimmt ist, über die Ausgangsseite (20b) ein optisches Wellenlängensignal λ in Richtung des Photodetektors zu übertragen, wobei die Ausgangsseite (20b) mit einer Empfangsfläche des Photodetektors, die zum Empfangen des optischen Signals bestimmt ist, in Kontakt steht oder von dieser in einem Abstand von weniger als oder gleich λ/n beabstandet ist, wobei n der Brechungsindex eines Mediums ist, das sich zwischen der Ausgangsseite (20b) und der Empfangsfläche des Photodetektors befindet.

15. Herstellungsverfahren für einen Multimode-Wellenleiter (1) nach einem der Ansprüche 1 bis 12, umfassend die folgenden Schritte:
∘ Herstellen mindestens eines parallelepipedischen Abschnitts aus dem Material mit hohem Index der Konzentrationsstruktur (20) aus einem Wafer desselben Materials;
∘ Zusammenfügen des parallelepipedischen Abschnitts mit der zweiten Seite (10b) des Multimodus-Lichtwellenleiters (10);
∘ Bearbeiten des parallelepipedischen Abschnitts, um die adiabatische Änderung der lokalen Querschnittabmessung d_{pc} des parallelepipedischen Abschnitts zu erhalten und somit die Konzentrationsstruktur (20) zu erhalten.

16. Herstellungsverfahren für einen Multimode-Wellenleiter nach einem der Ansprüche 1 bis 12, umfassend die folgenden Schritte:
∘ Ausführen eines konischen Abschnitts (3) auf der zweiten Seite (10b) des Multimodus-Lichtwellenleiters (10);
∘ Ablagern einer Verkapselungsschicht (4), die mindestens den konischen Abschnitt (3) bedeckt;
∘ Entfernen des konischen Abschnitts (3) durch selektives Ätzen des Materials desselben, wodurch ein durch die Einkapselungsschicht (5) begrenzter Hohlraum (6) frei wird;
∘ Ablagern des Materials mit hohem Index (21) der Konzentrationsstruktur (20), wodurch der Hohlraum (6) gefüllt wird und somit die Konzentrationsstruktur (20) gebildet wird.

## Claims

1. Multimode waveguide (1), comprising:
∘ a multimode optical fibre (10) comprising a core (11) made of a material of refractive index n_{fc} and having a transverse dimension d_{fc}, encircled by a cladding (12) made of a medium of refractive index n_{fg} lower than n_{fc}; and extending longitudinally along an optical axis Δ between a first face intended to receive an optical signal, and an opposite second face (10b) intended to transmit the optical signal;
∘ a concentrating structure (20):
▪ having an entrance face (20a) via which the concentrating structure (20) is optically coupled and an opposite exit face (20b) having an area smaller than that of the entrance face (20a),
▪ of frustoconical shape centred on the optical axis Δ, over the entire length between the entrance face (20a) and the exit face (20b),
▪ having a local transverse dimension d_{pc} the value d_{pc,in} of which at the entrance face (20a) is at least equal to a value d_{fc} of the transverse dimension d_{fc} of the core (11) of the multimode optical fibre (10) at the second face (10b);
▪ encircled over its entire length by a medium of refractive index n_{pg} lower than n_{pc}
▪ joined to the second face (10b) of the multimode optical fibre (10), either via contact between the second face (10b) and the entrance face (20a), or via an antireflection layer (2) placed between the second face (10b) and the entrance face (20a);
**characterised in that** the concentrating structure (20) is:
▪ made of a material of high refractive index n_{pc} higher than n_{fc},
▪ exhibiting an adiabatic variation in its local transverse dimension d_{pc} ranging from the value d_{pc,in} to a value d_{pc,out} at the exit face (20b);
▪ configured so that the number of optical modes supported at the exit face (20b) is at least equal to the number of optical modes supported by the multimode optical fibre (10).

2. Multimode waveguide (1) according to Claim 1, wherein the difference (n_{pc} - n_{pg}) is higher than 2.

3. Multimode waveguide (1) according to Claim 1 or 2, wherein the concentrating structure (20) is axisymmetric.

4. Multimode waveguide (1) according to any of Claims 1 to 3, wherein the concentrating structure (20) is configured so that the relationship (n_{pc}² - n_{pg}²)×d_{pc,out}² ≥ (n_{fc}² - n_{fg}²)×d_{fc}² is respected.

5. Multimode waveguide (1) according to any of Claims 1 to 4, wherein the high-index material of the concentrating structure (20) is a crystalline semiconductor material.

6. Multimode waveguide (1) according to ant of Claims 1 to 5, wherein the high-index material of the concentrating structure (20) is a group-IV element or compound, or is a III-V compound.

7. Multimode waveguide (1) according to any of Claims 1 to 6, wherein the concentrating structure (20) exhibits a continuous longitudinal variation d_{pc}(z) in the transverse dimension d_{pc}.

8. Multimode waveguide (1) according to Claim 7, wherein the longitudinal variation d_{pc}(z) in the transverse dimension d_{pc} has over its entire length a local slope less than or equal, in absolute value, to 20°.

9. Multimode waveguide (1) according to Claim 7 or 8, wherein the longitudinal variation d_{pc}(z) in the transverse dimension d_{pc} is decreasing over at least a portion of the concentrating structure (20) ending on the downstream face (20b).

10. Multimode waveguide (1) according to any of Claims 7 to 9, wherein the longitudinal variation d_{pc}(z) in the transverse dimension d_{pc} is increasing over a portion of the concentrating structure (20) extending from the upstream face (20a).

11. Multimode waveguide (1) according to any of Claims 1 to 10, wherein the concentrating structure (20) has a length Lₚ at least equal to two times the value d_{fc} of the transverse dimension d_{fc} of the core (11) of the multimode optical fibre (10) at the second face (10b).

12. Multimode waveguide (1) according to any of Claims 1 to 11, wherein the ratio d_{pc,in}/d_{pc,out} is higher than or equal to 2.

13. Light-emitting device comprising a light source and the multimode waveguide (1) according to any of Claims 1 to 12, the multimode waveguide (1) being optically coupled to the light source via the first face of the multimode optical fibre (10).

14. Photodetection device comprising a photodetector and the multimode waveguide (1) according to any of Claims 1 to 12, the multimode waveguide being intended to transmit, via the exit face (20b), an optical signal of wavelength λ in the direction of the photodetector, the exit face (20b) making contact with a receiving surface of the photodetector, which receiving surface is intended to receive the optical signal, or is spaced apart therefrom by a distance smaller than or equal to λ/n, where n is the refractive index of a medium located between the exit face (20b) and the receiving surface of the photodetector.

15. Process for manufacturing a multimode waveguide (1) according to any one of Claims 1 to 12, comprising the following steps:
∘ producing at least one parallelepipedal segment made of the high-index material of the concentrating structure (20), from a wafer of the same material;
∘ joining the parallelepipedal segment to the second face (10b) of the multimode optical fibre (10);
∘ machining the parallelepipedal segment so as to obtain the adiabatic variation in the local transverse dimension d_{pc} of the parallelepipedal segment, thus obtaining the concentrating structure (20).

16. Process for manufacturing a multimode waveguide according to any one of Claims 1 to 12, comprising the following steps:
∘ producing a frustoconical segment (3) on the second face (10b) of the multimode optical fibre (10);
∘ depositing an encapsulating layer (4) covering the at least the frustoconical segment (3);
∘ removing the frustoconical segment (3) by selectively etching the material thereof, thus freeing up an empty space (6) bounded by the encapsulating layer (5);
∘ depositing the high-index material (21) of the concentrating structure (20) thus filling the empty space (6), and thus forming the concentrating structure (20).
